# EUROPÄISCHE PATENTANMELDUNG

(11) **EP 2 428 939 A1**
(43) Veröffentlichungstag der Anmeldung: **14.03.2012**
(21) Anmeldenummer: 11166840.6
(22) Anmeldetag: 20.05.2011
(51) Int. Cl.: G07F 7/00, G07F 15/00, G07F 15/12, G07F 17/12, G07F 7/06

(54) **Serviceautomat zum Beziehen und/oder Aufladen eines Energiespeichers für ein Elektrofahrrad**

(30) Priorität: 08.09.2010 DE 102010040388
(71) Anmelder: SIEMENS AKTIENGESELLSCHAFT, 80333 München (DE)
(72) Erfinder: Braukmann, Erwin, 82515, Wolfratshausen (DE)

(57) **Zusammenfassung**

Die Erfindung betrifft einen Serviceautomaten (1) zum Beziehen und/oder Aufladen eines Energiespeichers (2, 2') für ein Elektrofahrrad. Der Serviceautomat (1) umfasst ein im Freien aufstellbares Automatengehäuse (3), welches wenigstens ein Aufnahmefach (4, 4') mit einer Zugriffsöffnung (5, 5') für einen Benutzer zur Abgabe bzw. Ausgabe des Energiespeichers (2', 2) aufweist. Ferner umfasst er ein Abdeckelement (6, 6') zum Verschließen bzw. Freigeben der Zugriffsöffnung (5, 5'), welches mittels eines Verriegelungssystems (7) verriegelbar ist. Außerdem umfasst er ein mit dem Verriegelungssystem (7) zusammenwirkendes Authentifizierungssystem zur Betätigung des Verriegelungssystems (7) durch einen authentifizierten Benutzer. Hierdurch ist ein Beziehen bzw. Aufladen eines Energiespeichers (2, 2') für ein Elektrofahrrad mit hohem Automatisierungsgrad für einen bestimmbaren Kreis berechtigter Benutzer möglich.

## Beschreibung

Die Erfindung bezieht sich auf einen Serviceautomaten zum Beziehen und/oder Aufladen eines Energiespeichers für ein Elektrofahrrad gemäß dem Oberbegriff des Patentanspruches 1.

Bei Elektrofahrrädern werden Elektromotoren als Anfahrhilfe, zur Unterstützung der Kurbelbewegung oder zur vollständigen Traktionsübernahme eingesetzt. Die Energieversorgung des Elektromotors wird durch einen austauschbar am Fahrrad angeordneten Speicher für elektrische Energie bewerkstelligt. Häufig werden Nickel-Metall-Hydrid-, Nickel-Cadmium- oder Lithium-Ionen-Akkumulatoren als Energiespeicher verwendet. Die speicherbare elektrische Energie beträgt beispielsweise bis zu 18 Ah bei 24 V oder 36 V Nennspannung. Lithium-Ionen-Akkumulatoren haben zwar einen Gewichtsvorteil, sind aber kostenaufwändiger in der Anschaffung. Allen Energiespeichern ist jedoch gemeinsam, dass sie eine begrenzte Speicherkapazität aufweisen, was die Reichweite von Elektrofahrrädern bei motorunterstützter Fahrt grundsätzlich beschränkt. Fahrer von Elektrofahrrädern müssen daher ein Ladegerät mitführen, um einen entladenen Energiespeicher unterwegs wieder aufladen zu können. Dieser Ladevorgang erfordert einen geeigneten Stromnetzanschluss mit passender Steckverbindung und bedarf einer größeren Wartezeit, bis der umständliche Ladevorgang abgeschlossen ist. Alternativ kann der Fahrer mit seinem Elektrofahrrad einen aufgeladenen Energiespeicher zur Reserve mitführen, den er bei Bedarf gegen den entladenen Energiespeicher unterwegs austauschen kann. Dabei führt er aber zusätzlichen Ballast mit, was beim Fahrradfahren im Allgemeinen unerwünscht ist.

In Gebieten mit erhöhtem Fahrradverkehr, etwa in Naherholungsgebieten, in Urlaubsregionen sowie an Fernradwegen, haben sich daher Servicestationen etabliert, an denen Fahrer von Elektrofahrrädern ihren entladenen Energiespeicher gegen einen aufgeladenen Energiespeicher austauschen können. Bei diesen Servicestationen handelt es sich in der Regel um Feriengasthöfe oder Hotels, die für Radtouristen Energiespeicher bereithalten, die an einem Ladegerät im Hause aufgeladen und auf Anfrage im Austausch gegen einen entladenen Energiespeicher ausgehändigt werden.

So ist aus der Offenlegungsschrift DE 10 2008 036 595 A1 beispielsweise ein nachhaltiges Verkehrssystem bekannt, das auf einer elektrisch betriebenen Flotte aus speziellen Fahrzeugen basiert, deren Batterien in kurzer Zeit in Akkutankstellen ausgetauscht werden können. Bei den Fahrzeugen handelt es sich um Elektrobusse, Elektrofahrzeuge, Stadtfahrzeuge aber auch um Elektrofahrräder. Außer beim Elektrofahrrad werden die Batterien durch automatisierte Wechseleinrichtungen seitlich entnommen bzw. zugeführt. Das Einlagern und Entnehmen der Batterieeinheiten oder auch ganzer Batteriemodule erfolgt über einen automatischen Zuführroboter. Es ist auch möglich jede Batterieeinheit einzeln oder in Gruppen zu laden. Hierzu kann an jeder Wechseleinrichtung eine Testmessung an den Batterien vorgenommen werden, die deren aktuellen Lade- und Leistungszustand erfasst und eventuelle Defekte feststellt.

Über die technische Ausgestaltung der Batterie-Wechselstation für Elektrofahrräder sowie die Benutzungsmöglichkeiten bzw. -berechtigungen dieser bekannten Wechselstationen für Fahrer von Elektrofahrrädern ist nichts offenbart.

Der Erfindung liegt die Aufgabe zugrunde, einen Serviceautomaten der eingangs genannten Art derart weiterzubilden, dass ein Beziehen bzw. Aufladen eines Energiespeichers für ein Elektrofahrrad mit hohem Automatisierungsgrad für einen bestimmbaren Kreis berechtigter Benutzer möglich ist.

Die Aufgabe wird gelöst durch einen gattungsgemäßen Serviceautomaten mit den im kennzeichnenden Teil des Patentanspruches 1 angegebenen Merkmalen. Zunächst umfasst der Serviceautomat ein im Freien aufstellbares Automatengehäuse, das mittels geeigneter Oberflächenbehandlung und Dichtungssätze als wetterfeste und mittels dicker Stahlbleche sowie weniger Ansatzfugen für Aufbruchwerkzeuge als gegen Vandalismus armierte Außenhaut des Serviceautomaten ausgebildet sein kann. Das Automatengehäuse weist wenigstens ein Aufnahmefach mit einer Zugriffsöffnung, durch die ein Energiespeicher von einem Benutzer abgeben beziehungsweise vom Automaten ausgegeben werden kann. Dabei kann der Serviceautomat genau ein Aufnahmefach, das sowohl als Abgabe- als auch als Ausgabefach dient, oder mehrere Aufnahmefächer aufweisen, wovon die einen als Abgabefach und die anderen als Ausgabefach dienen oder ebenfalls beide Funktionen haben. Der Serviceautomat umfasst ferner ein Abdeckelement zum Verschließen bzw. Freigeben einer Zugriffsöffnung, welches mittels eines Verriegelungssystems verriegelbar ist. Ist die Zugriffsöffnung durch das Abdeckelement verschlossen, kann ein Benutzer nicht in das Aufnahmefach greifen, um einen Energiespeicher abzugeben oder zu entnehmen. Hierzu muss die Zugriffsöffnung durch das Abdeckelement freigegeben sein, was je nach vorgesehenem Mechanismus beispielsweise durch Aufklappen oder Aufschieben des Abdeckelements erfolgen kann. Im verschlossenen Zustand ist das Abdeckelement beispielsweise durch mechanische oder elektromechanische Schließelemente verriegelbar, so dass nur ein Benutzer, der das Verriegelungssystem betätigen kann, das Abdeckelement entriegeln und damit den Zugriff ins Aufnahmefach freimachen kann. Außerdem umfasst der Serviceautomat ein mit dem Verriegelungssystem zusammenwirkendes Authentifizierungssystem, das die Betätigung des Verriegelungssystems durch einen authentifizierten Benutzer ermöglicht. Über das Authentifizierungssystem lässt sich ein Kreis berechtigter Benutzer definieren, der bei einem hohen Automatisierungsgrad des Serviceautomaten geladene Energiespeicher für Elektrofahrräder, gegebenenfalls im Austausch gegen einen voll- oder teilentladenen Energiespeicher, beziehen und/oder einen voll- oder teilentladenen Energiespeicher aufladen kann. Außer zu Wartungszwecken ist hier kein Personal für den Betrieb des Serviceautomaten erforderlich, so dass diese auch an entlegenen Orten im Freien aufstellbar sind, um ein nach den Bedürfnissen von Elektrofahrradfahrern ausgerichtetes, dichtes Netz an Serviceautomaten bereitzustellen.

In einer vorteilhaften Ausgestaltung des erfindungsgemäßen Serviceautomaten weist das Authentifizierungssystem eine automatenseitige Leseeinrichtung für vom Benutzer mitgeführte Identifizierungsmittel auf. Die Identifizierungsmittel können beispielsweise als Chipkarte ausgebildet sein, die in einen am Serviceautomaten angeordneten Kartenleser einführbar ist, um die auf der Chipkarte gespeicherte Benutzungsberechtigung auszulesen. Alternativ können die Identifizierungsmittel als Transponderkarte ausgebildet sein, die über eine geeignete Funkleseeinrichtung durch Radiofrequenzsignale auslesbar ist. Des Weiteren können die Identifizierungsmittel durch ein Mobilfunkgerät gebildet werden, über das sich der Benutzer an einer automatenseitigen Kommunikationsschnittstelle durch Identifikation authentisiert. Schließlich kann am Serviceautomaten auch ein Eingabeeinheit, etwa eine Tastatur oder ein Touchscreen, über das ein Benutzer seine Berechtigung durch Eingabe einer persönlichen Identifikationsnummer nachweist. In jedem Fall kann nach Authentifizierung eines berechtigten Benutzers automatisch eine Betätigung des Verriegelungssystems erfolgen, so dass dieser Zugriff auf ein Aufnahmefach erhält.

In einer bevorzugten Ausführungsform umfasst der erfindungsgemäße Serviceautomat ein Magazin, in welchem aufgeladene Energiespeicher für den Austausch gegen abgegebene Energiespeicher oder für deren Bezug ohne Austausch bereitstellbar sind, und/oder eine Ladeeinrichtung zum Aufladen eines abgegebenen Energiespeichers mit elektrischer Energie. Je nach Ausgestaltung kann der Serviceautomat als reine Bezugs- oder Wechselstation, als reine Ladestation oder als Kombination aus beidem ausgebildet sein. Bei dem Magazin kann es sich um ein Vielzahl von Aufnahmefächern handeln oder um ein davon getrenntes Regalsystem oder Karussellsystem.

In einer bevorzugten Ausgestaltung umfasst der erfindungsgemäße Serviceautomat ein automatisches Transportsystem zur Zuführung eines in das Aufnahmefach abgegebenen Energiespeichers zum Magazin oder zur Ladeeinrichtung bzw. zur Zuführung eines aufgeladenen Energiespeichers vom Magazin oder von der Ladeeinrichtung zum Aufnahmefach. Wenn das Magazin und/oder die Ladeeinrichtung im Automatengehäuse getrennt von den Aufnahmefächern angeordnet sind, können hierdurch die Energiespeicher automatisch von und zu diesen beispielsweise durch ein Linearsystem mit motorisch bewegten Schlitten transportiert werden.

In einer vorteilhaften Ausführungsform umfasst der erfindungsgemäße Serviceautomat eine Eingabeeinrichtung zur wahlweisen Anforderung eines Austausches eines Bezuges oder einer Aufladung mit oder ohne Schnellladefunktion des abgegebenen Energiespeichers durch einen authentifizierten Benutzer. Nach Authentifizierung hat ein berechtigter Benutzer hierdurch die Möglichkeit, eine dem gewünschten Service entsprechende Eingabe vorzunehmen. Die Eingabeeinrichtung kann beispielsweise als Tastatur oder als Touchscreen ausgebildet sein. Nach erfolgter Eingabe können mögliche Bedienschritte über eine Anzeigeeinrichtung mitgeteilt werden.

In einer weiteren vorteilhaften Ausgestaltung umfasst der erfindungsgemäße Serviceautomat eine Diagnoseeinrichtung zur Überprüfung von Ladezustand und/oder Qualität und/oder Funktionstüchtigkeit des abgegebenen Energiespeichers und eine Anzeigeeinrichtung zur Darstellung eines Diagnoseergebnisses. Die Diagnoseeinrichtung kann Messeinrichtungen für elektrische Größen sowie eine Auswertungseinrichtung für Messergebnisse aufweisen. Nach Abgabe eines auszutauschenden oder aufzuladenden Energiespeichers erfolgt zunächst eine elektrische Kontaktierung des Energiespeichers mit der Diagnoseeinrichtung, worauf dieser auf Defekte untersucht wird und bei festgestellter Funktionstüchtigkeit der aktuelle Ladungszustand und die noch zur Verfügung stehenden Ladekapazität gemessen wird. Das Diagnoseergebnis wird dem Benutzer auf einer Anzeigeeinrichtung dargestellt; insbesondere kann die Annahme eines defekten Energiespeichers durch den Serviceautomaten verweigert werden.

Vorzugsweise ist im Automatengehäuse eines erfindungsgemäßen Serviceautomaten wenigstens ein Steckanschluss für eine elektrische Kontaktierung eines abgegebenen Energiespeichers mit der Ladeeinrichtung und/oder der Diagnoseeinrichtung angeordnet. Der Steckanschluss entspricht demjenigen, mittels dessen der Energiespeicher am Elektrofahrrad angeschlossen wird. Ein derartiger Steckanschluss kann in einem oder jedem Aufnahmefach installiert sein, damit der Benutzer einen Energiespeicher in eine definierte Position verbringen oder von dieser entnehmen kann. In der Kontaktposition kann eine elektrische Verbindung zur Diagnoseeinrichtung oder zum Ladegerät hergestellt werden. Steckanschlüsse können auch in den Positionen des Magazins installiert sein, von wo aus angeschlossene Energiespeicher diagnostiziert oder aufgeladen werden können. Des Weiteren können Steckanschlüsse direkt an der Diagnoseeinrichtung und am Ladegerät im Automatengehäuse angeordnet sein, um eine Kontaktherstellung mit dem Energiespeicher zu ermöglichen. Außerdem können Steckanschlüsse für die Kontaktierung unterschiedlicher Typen von Energiespeichern vorgesehen sein.

In einer weiteren bevorzugten Ausführungsform umfasst der erfindungsgemäße Serviceautomat ein Bezahlsystem zur Entrichtung der für einen durch einen Benutzer in Anspruch genommenen Service fälligen Gebühr. In dem Bezahlsystem können unterschiedliche Gebühren für den Bezug eines aufgeladenen Energiespeichers, für den Austausch eines entladenen gegen einen aufgeladenen Energiespeicher und für das Aufladen eines entladenen Energiespeichers hinterlegt sein. Eine Messvorrichtung ermittelt die bezogene Energieladung sowie den in Anspruch genommenen Service einer Normal- oder Schnellladung, auf dessen Grundlage von dem Bezahlsystem die fällige Gebühr ermittelt wird. Das Bezahlsystem ist mit dem Verriegelungssystem derart gekoppelt, dass dieses automatisch, aber erst dann betätigt wird, wenn die fällige Gebühr entrichtet wurde. Daraufhin kann der Benutzer das Abdeckelement desjenigen Aufnahmefachs öffnen, in welchem der geladene Energiespeicher zur Ausgabe vorgesehen ist. Das Bezahlsystem kann zur Bezahlung mittels Bargeld und/oder mittels Geld- oder Kreditkarte und/oder mittels Mobilfunkverbindung ausgebildet sein.

In einer weiteren bevorzugten Ausgestaltung umfasst der erfindungsgemäße Serviceautomat ein Reservierungssystem zur Reservierung eines geladenen Energiespeichers durch einen authentifizierten Benutzer. Das Reservierungssystem kann durch eine Internet- oder eine Mobilfunkverbindung seitens des Benutzers bedient werden, indem dieser sich über einen Internetanschluss oder ein Mobilfunkgerät direkt am Serviceautomaten oder über den Server des Serviceautomatenbetreibers durch eine Identifikationsnummer authentisiert. Daraufhin kann der Benutzer den oder die Serviceautomaten auswählen, in denen ein Energiespeicher eines auswählbaren Typs innerhalb eines auswählbaren Zeitraums für den exklusiven Bezug durch diesen Benutzer bereitgestellt ist. Das Reservierungssystem bestätigt dem Benutzer nach Eingabe seines Reservierungswunsches, ob diesem nachgekommen werden kann.

In einer weiteren vorteilhaften Ausführungsform umfasst der erfindungsgemäße Serviceautomat ein Solarpaneel zur Bereitstellung von elektrischer Energie für die Ladeeinrichtung und/oder den Betrieb des Automaten. Mittels des Solarpaneels, welches auf oder auch neben dem Automatengehäuse angeordnet werden kann, ist eine autarke Energieversorgung des Serviceautomaten möglich, so dass dieser auch an Standorten ohne Stromnetzanschluss aufstellbar ist. Hierdurch kann die Dichte des Netzes an Serviceautomaten und damit die Benutzerfreundlichkeit erhöht werden.

Weitere Vorteile und Eigenschaften der Erfindung ergeben sich aus einem nachfolgend anhand von Zeichnungen beschriebenen Ausführungsbeispiel, in deren
- FIG 1: ein erfindungsgemäßer Serviceautomat in einer Prinzipdarstellung,
- FIG 2: eine Frontansicht einer ersten Variante eines erfindungsgemäßen Serviceautomaten und
- FIG 3: eine perspektivische Darstellung einer zweiten Variante eines erfindungsgemäßen Serviceautomaten
schematisch veranschaulicht sind.

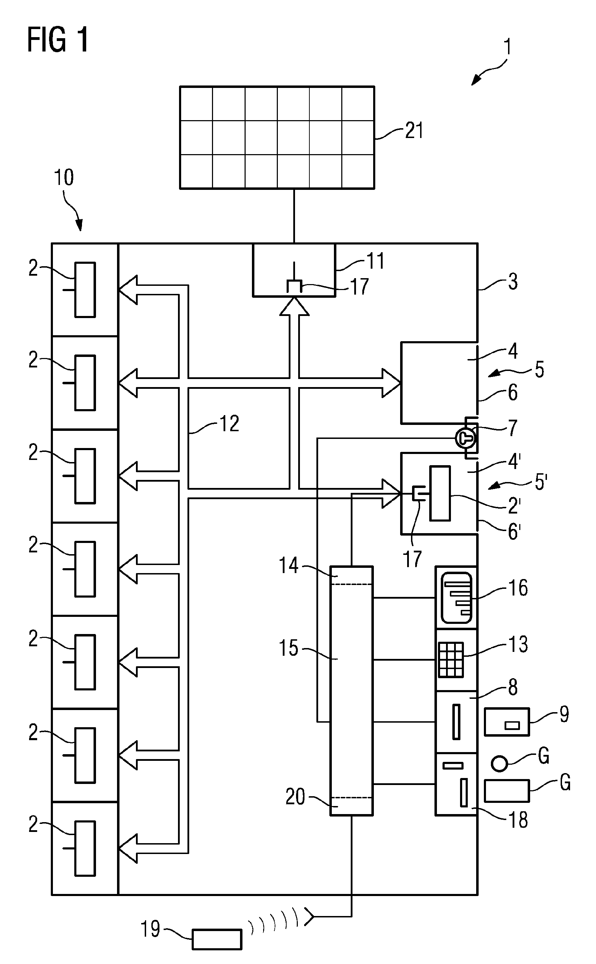

An einem Serviceautomat 1 gemäß FIG 1 bis FIG 3 kann ein Benutzer, der bestimmungsgemäß Fahrer eines Elektrofahrrades ist, entweder einen aufgeladenen Energiespeichers 2 neu oder im Austausch gegen einen voll- oder teilentladenen Energiespeicher 2' beziehen oder aber letzteren wieder aufladen.

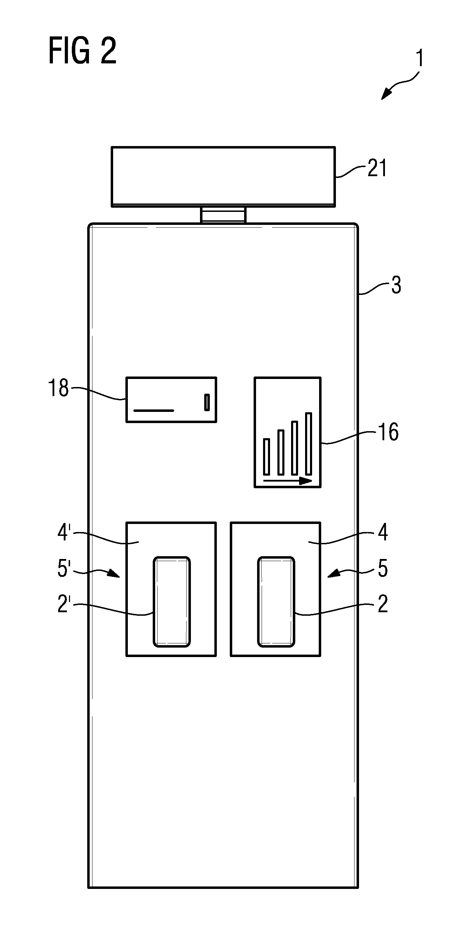

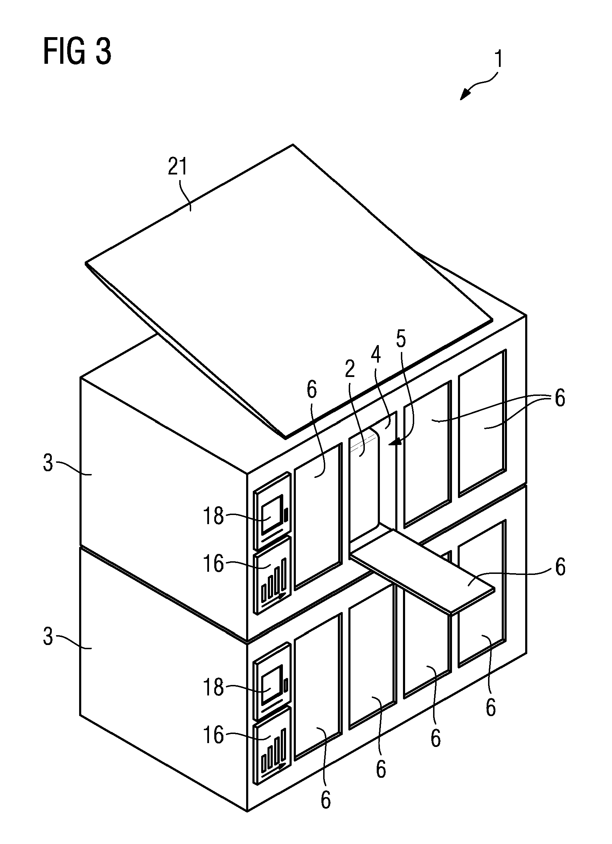

Erfindungsgemäß umfasst der Serviceautomat 1 hierfür ein Automatengehäuse 3, das im Freien aufstellbar ist und daher witterungsbeständig und vandalismussicher ausgebildet ist. Das Automatengehäuse 3 weist in den Ausführungsbeispielen gemäß FIG 1 und FIG 2 je ein Aufnahmefach 4 bzw. 4' für einen Energiespeicher 2 bzw. 2' auf, wobei das eine Aufnahmefach 4' für die Abgabe eines entladenen Energiespeichers 2' und das andere Aufnahmefach 4 für die Ausgabe eines aufgeladenen Energiespeichers 2 vorgesehen ist. Zur Abgabe bzw. Ausgabe eines Energiespeichers 2' bzw. 2 muss der Benutzer durch eine Zugriffsöffnung 5' bzw. 5 greifen, was nur möglich ist, wenn diese von einem Abdeckelement 6' bzw. 6 freigegeben wird. Das Abdeckelement 6' bzw. 6 verschließt im Normalzustand die Zugriffsöffnung 5' bzw. 5, um unberechtigten Benutzern den Zugriff zu verwehren. Ein berechtigter Benutzer kann das Abdeckelement 6' bzw. 6 nach Betätigung eines Verriegelungssystems 7 aufschieben oder gemäß FIG 3 aufklappen, um einen entladenen Energiespeicher 2' abzugeben oder einen zur Ausgabe vorgesehenen geladenen Energiespeicher 2 zu entnehmen. Das Verriegelungssystem 7 weist nicht dargestellte mechanische oder elektromechanische Schließeinrichtungen auf, die ein Abdeckelement 2' bzw. 2 im die Zugriffsöffnung 5' bzw. 5 verschließenden Zustand verriegeln.

Erfindungsgemäß umfasst der Serviceautomat 1 ein Authentifizierungssystem, welches mit dem Verriegelungssystem 7 derart zusammenwirkt, dass ein authentifizierter Benutzer das Verriegelungssystem 7 durch seine Authentifizierung automatisch oder danach durch einen weiteren Bedienschritt betätigt. Hierzu weist das Authentifizierungssystem eine automatenseitige Leseeinrichtung 8 für vom Benutzer mitgeführte Identifizierungsmittel 9 auf. Bei der Leseeinrichtung 8 kann es sich um einen Kartenleser für eine Chipkarte handeln, welche einem Benutzer als Identifizierungsmittel 9 dient. Nach Einführen der Chipkarte in den Kartenleser werden hinterlegte Identifikationsdaten - gegebenenfalls in Kombination mit der Eingabe einer persönlichen Identifikationsnummer über eine Eingabeeinrichtung - ausgelesen, um den Benutzer zu authentisieren. Hierdurch ist es möglich die Automatenbenutzung nur einem eingeschränkten Kreis an Benutzern vorzubehalten, welches Recht der Fahrer beim Kauf eines Elektrofahrrades oder auch gesondert erwerben kann.

Im Inneren des Automatengehäuses 3 ist ein Magazin 10 angeordnet, welches als Regalssystem ausgebildet sein kann. An der Rückwand des Automatengehäuses 3 sind in definierten Regalpositionen geladenen Energiespeicher 2 bereitgestellt, die mittels eines Transportsystems 12 automatisch entnommen werden. Das Transportsystem 12 ist als Linearsystem mit Transportschlitten ausgebildet und bewerkstelligt die automatische Zuführung von Energiespeichern 2' bzw. 2 im Serviceautomaten 1. Ein abgegebener Energiespeicher 2' wird vom Abgabefach 4' entweder zu einer freien Regalposition im Magazin 10 geführt oder direkt zu einem im Automatengehäuse 3 angeordneten Ladeeinrichtung 11. Umgekehrt wird ein aufgeladene Energiespeicher 2 entweder vom Magazin 10 oder vom Ladegerät 11 zum Ausgabefach 4 transportiert. Die Ladeeinrichtung 11 wird durch ein auf dem Automatengehäuse 3 angeordnetes Solarpaneel 21 mit elektrischer Energie versorgt; sollte aufgrund des Aufstellungsortes kein Stromnetzanschluss verfügbar sein, so kann der komplette Serviceautomat 1 auf dieser Weise mit Energie versorgt werden. Damit können erfindungsgemäße Serviceautomaten 1 auch an entlegenen Standorten aufgestellt werden.

Damit der Benutzer wählen kann, ob er einen aufgeladenen Energiespeicher 2 mit oder ohne Austausch gegen einen entladenen Energiespeicher 2' bezieht oder ob er einen entladenen Energiespeicher 2' mit oder ohne Schnellladefunktion auflädt, ist am Automatengehäuse 3 eine Eingabeeinrichtung 13 in Form einer Tastatur angeordnet. Zur Bezahlung des gewählten Service ist ein Bezahlsystem 18 vorgesehen, das sowohl Bezahlung mittels Bargeld G über einen Münzeinwurf und einen Banknoteneinzug als auch über eine Kredit- oder Geldkarte ermöglicht. Des Weiteren ist ein Reservierungssystem vorgesehen, durch das ein autentifizierter Benutzer an einem wählbaren Serviceautomaten 1 einen geladenen Energiespeicher 2 für eine wählbare Zeitspanne reservieren kann. Hierzu bedient der Benutzer eine Anforderungseinheit 19, etwa ein Mobiltelefon, um die gewünschte Reservierung über eine entsprechende Kommunikationsstelle 20 an eine zentrale Recheneinheit 15 des Serviceautomaten 1 zu übertragen. Dies erhöht die Benutzerfreundlichkeit erheblich, da eine Routenplanung mit einem Elektrofahrrad hierdurch unterstützt werden kann.

Um den aktuellen Ladezustand oder auch die zur Verfügung stehende Ladekapazität eines abgegebenen Energiespeichers 2' zu ermitteln, ist im Automatengehäuse 3 eine Diagnoseeinrichtung 14 angeordnet. Über Messeinrichtungen und Auswertungseinrichtungen, die Teil der Recheneinrichtung 15 ist, kann damit nicht nur die beim Aufladen bezogene, gebührenpflichtige Energiemenge und die Qualität des Energiespeichers 2' festgestellt werden, sondern auch dessen Funktionstüchtigkeit. So ist es insbesondere möglich, die Annahme defekter Energiespeicher 2' zu verweigern. Um einem Benutzer das Diagnoseergebnis einschließlich der Annahmeverweigerung eines defekten Energiespeichers 2' mitzuteilen, umfasst die Diagnoseeinrichtung 14 eine Anzeigeeinrichtung 16, die als LCD-Anzeige ausgebildet sein kann. Zur Kontaktierung der Energiespeicher 2' bzw. 2 umfasst der Serviceautomat 1 Steckanschlüsse 17, die dem am zugehörigen Elektrofahrrad entsprechen. Damit ist eine definierte Kontaktposition beispielsweise in den Aufnahmefächern 4' bzw. 4, im Magazin 10, an der Ladeeinrichtung 17 und an der Diagnoseeinrichtung 14 gegeben.

Während die Ausführungsform gemäß FIG 2 als Hochschrank eine Nebeneinanderanordnung als Erweiterungsmöglichkeit beinhaltet, so ist zur Kapazitätserweiterung der Ausführungsform nach FIG 3 eine Übereinanderanordnung von Automatengehäusen 3 vorgesehen. Der modulare Aufbau gestattet jedenfalls eine einfache Erweiterung erfindungsgemäßer Serviceautomaten 1, falls der Bedarf an Energiespeichern 2 an einem Standort größer wird.

## Patentansprüche

1. Serviceautomat (1) zum Beziehen und/oder Aufladen eines Energiespeichers (2, 2') für ein Elektrofahrrad,
**gekennzeichnet durch** ein im Freien aufstellbares Automatengehäuse (3), welches wenigstens ein Aufnahmefach (4, 4') mit einer Zugriffsöffnung (5, 5') für einen Benutzer zur Abgabe bzw. Ausgabe des Energiespeichers (2', 2) aufweist, **durch** ein Abdeckelement (6, 6') zum Verschließen bzw. Freigeben der Zugriffsöffnung (5, 5'), welches mittels eines Verriegelungssystems (7) verriegelbar ist, und **durch** ein mit dem Verriegelungssystem (7) zusammenwirkendes Authentifizierungssystem zur Betätigung des Verriegelungssystems (7) **durch** einen authentifizierten Benutzer.

2. Serviceautomat (1) nach Anspruch 1,
wobei das Authentifizierungssystem eine automatenseitige Leseeinrichtung (8) für vom Benutzer mitgeführte Identifizierungsmittel (9) aufweist.

3. Serviceautomat (1) nach Anspruch 1 oder 2,
mit einem Magazin (10), in welchem aufgeladene Energiespeicher (2) für den Austausch gegen abgegebene Energiespeicher (2') oder den Bezug ohne Austausch bereitstellbar sind, und/oder mit einer Ladeeinrichtung (11) zum Aufladen eines abgegebenen Energiespeichers (2') mit elektrischer Energie.

4. Serviceautomat (1) nach einem der Ansprüche 1 bis 3,
mit einem automatischen Transportsystem (12) zur Zuführung eines in das Aufnahmefach (4') abgegebenen Energiespeichers (2') zum Magazin (10) oder zur Ladeeinrichtung (11) bzw. eines aufgeladenen Energiespeichers (2) vom Magazin (10) oder von der Ladeeinrichtung (11) zum Aufnahmefach (4).

5. Serviceautomat (1) nach einem der Ansprüche 1 bis 4,
mit einer Eingabeeinrichtung (13) zur wahlweisen Anforderung eines Austausches eines Bezuges oder einer Aufladung mit oder ohne Schnellladefunktion des abgegebenen Energiespeichers (2') durch einen authentifizierten Benutzer.

6. Serviceautomat (1) nach einem der Ansprüche 1 bis 5,
mit einer Diagnoseeinrichtung (14) zur Überprüfung von Ladezustand und/oder Qualität und/oder Funktionstüchtigkeit des abgegebenen Energiespeichers (2') und einer Anzeigeeinrichtung (16) zur Darstellung eines Diagnoseergebnisses.

7. Serviceautomat (1) nach einem der Ansprüche 3 bis 6,
wobei im Automatengehäuse (3) wenigstens ein Steckanschluss (17) für eine elektrische Kontaktierung eines abgegebenen Energiespeichers (2') mit der Ladeeinrichtung (11) und/oder der Diagnoseeinrichtung (14) angeordnet ist.

8. Serviceautomat (1) nach einem der Ansprüche 1 bis 7,
mit einem Bezahlsystem (18) zur Entrichtung der für einen durch einen Benutzer in Anspruch genommenen Service fälligen Gebühr.

9. Serviceautomat (1) nach einem der Ansprüche 1 bis 8,
mit einem Reservierungssystem (19, 20) zur Reservierung eines geladenen Energiespeichers (2) durch einen authentifizierten Benutzer.

10. Serviceautomat (1) nach einem der Ansprüche 1 bis 9,
mit einem Solarpaneel (21) zur Bereitstellung von elektrischer Energie für die Ladeeinrichtung (11) und/oder den Betrieb des Serviceautomaten (1).
